# EUROPEAN PATENT APPLICATION

(11) **EP 3 804 964 A1**
(43) Date of publication of application: **14.04.2021**
(21) Application number: 20785202.1
(22) Date of filing: 31.03.2020
(51) Int. Cl.: B29C 64/153, B29C 64/20, B33Y 10/00, B33Y 30/00

(54) **3D PRINTING APPARATUS AND 3D PRINTING METHOD**

(30) Priority: 01.04.2019 CN 201910255297
(71) Applicant: Kocel Intelligent Machinery Limited, Yinchuan, Ningxia 750021 (CN)
(72) Inventor: ZHOU, Zhijun, Beijing West Road, Xixia District Yinchuan, Ningxia 750021 (CN); LIU, Yi, Beijing West Road, Xixia District Yinchuan, Ningxia 750021 (CN); PENG, Fan, Beijing West Road, Xixia District Yinchuan, Ningxia 750021 (CN); YANG, Bao, Beijing West Road, Xixia District Yinchuan, Ningxia 750021 (CN); HE, Jiejun, Beijing West Road, Xixia District Yinchuan, Ningxia 750021 (CN); MENG, Nanhua, Beijing West Road, Xixia District Yinchuan, Ningxia 750021 (CN)
(74) Representative: Pulieri, Gianluca Antonio
(86) International application number: PCT/CN2020/082241
(87) International publication number: WO 2020/200183

(57) **Abstract**

The present application relates to the technical field of 3D printing, and provides a 3D printing apparatus and a 3D printing method. The 3D printing apparatus comprises a frame, and a working area is formed in the frame; a powder paving device, a printing device, and a moving device are disposed in the working area; the powder paving device and the printing device are simultaneously driven by the moving device to move in a staggered manner along different moving paths, so that powder paving of the powder paving device and printing of the printing device are achieved at the same time. The technical problem in the prior art that the printing efficiency of the 3D apparatus is greatly limited resulting from that because powder paving and printing are completed successively at different steps, time needs to be spent on waiting and a long period is spent on printing after powder paving on each layer is solved.

## Description

### Cross-Reference to Related Applications

The present application claims priority to Chinese Patent Application No. CN201910255297.9, filed with the Chinese Patent Office on April 1, 2019, entitled "3D Printing Apparatus and 3D Printing Method", which is incorporated herein by reference in its entirety.

### Technical Field

The present disclosure relates to the technical field of 3D printing, and in particular to a 3D printing apparatus and a 3D printing method.

### Background Art

3D Printing is a rapid prototyping technology, which is a technology for constructing an object on the basis of a digital model file using a bondable material such as a powdered metal or plastic by means of printing layer by layer.

The related art provides a 3D printing apparatus performing a printing process. Specifically, a layer of powder is first spread uniformly on a platform, and a print head scans and sprays a liquid material in a particular area, so that the powder at the sprayed part is bonded together. At this time, the platform is lowered by a distance of a certain layer thickness. The above steps are repeated until the powder spreading and printing operations are completed for all the layers. The current powder 3D printing apparatuses based on the above-mentioned technology are generally characterized in that powder spreading and printing are carried out successively in different steps, involving a waiting time, so that a longer period is required for powder spreading and printing over a single layer. As a result, the printing efficiency of the apparatuses is greatly limited. If desired, the efficiency can be improved only by methods such as increasing the printing area, improving the powder spreading and printing speeds, and increasing the width of the print head. However, in the above methods, the increase in the printing area will lead to an increased difficulty in manufacturing the entire apparatus, or even make it unprocurable. The powder spreading and printing speeds can hardly be increased after they reach certain values. The increase in the width of the print head will lead to a great increase in costs of manufacturing and maintenance of the apparatus and an increase in difficulty of control. The above methods allow only a small improvement in the printing efficiency of the apparatus and are not enough to meet the requirements for industrialized widespread use of the powder 3D printing technologies.

The information disclosed in the Background Art section is only intended to facilitate understanding of the overall background art of the present disclosure, and shall not be deemed as admitting or implying in any form that the information constitutes the prior art well known to those skilled in the art.

### Summary

An objective of the present disclosure is to provide a 3D printing apparatus and a 3D printing method to alleviate the technical problem in the prior art, in which the printing efficiency of 3D printing apparatuses is greatly limited by a longer period required for powder spreading and subsequent printing over a single layer because the powder spreading and printing are carried out successively in different steps, involving a waiting time.

In a first aspect, the present disclosure provides a 3D printing apparatus, including a frame in which a working area is formed,
wherein a powder spreading device, a printing device, and a moving device are disposed in the working area; and
the powder spreading device and the printing device are simultaneously driven by the moving device to move in a staggered manner along different moving paths, so that spreading of powder by the powder spreading device and printing by the printing device are implemented at the same time.

Further, the moving device includes a guiding mechanism, a driving mechanism, and a detection sensor,
wherein the driving mechanism is in transmission connection with the guiding mechanism, and the detection sensor is disposed on the guiding mechanism and is configured to detect the positions of the powder spreading device and the printing device; and
both the printing device and the powder spreading device are disposed on the guiding mechanism.

Further, the 3D printing apparatus further includes a building platform,
wherein the powder spreading device has a length greater than or equal to a width of the building platform; and
the driving mechanism drives the guiding mechanism to move on the building platform.

Further, the guiding mechanism includes a first guide frame and a second guide frame,
wherein the powder spreading device is mounted to the first guide frame; the printing device is mounted to the second guide frame; and
both the first guide frame and the second guide frame reciprocate in a first direction.

Further, the powder spreading device undergoes reciprocation in the first direction of the building platform along with the first guide frame; and
the printing device undergoes reciprocation in the first direction of the building platform along with the second guide frame and can reciprocate also in a second direction perpendicular to the first direction,
wherein a movement displacement of the printing device in the second direction is greater than the length of the powder spreading device.

Further, the powder spreading device undergoes reciprocation in the first direction of the building platform along with the first guide frame and can reciprocate also in a third direction; and
the printing device undergoes reciprocation in the first direction of the building platform along with the second guide frame and can reciprocate in a second direction and in the third direction, respectively, wherein the first direction, the second direction, and the third direction are perpendicular to one another,
wherein a movement displacement of the printing device in the second direction is greater than the length of the powder spreading device, or a movement distance of the printing device in the third direction is higher than a height of the position of the powder spreading device.

Further, the building platform includes a square box; and
the square box has a bottom plate movable up and down in a third direction.

Further, the building platform includes a flat plate.

Further, the 3D printing apparatus further includes a liquid material device configured to provide a printing liquid material, wherein the liquid material device is disposed inside the frame, or the liquid material device is disposed independently of the frame.

Further, the 3D printing apparatus further includes a powder processing system configured to provide powder to the powder spreading device; and the powder processing system is disposed independently of the frame. Further, the 3D printing apparatus further includes a conveying device; and the conveying device drives the building platform into or out of the working area through a transmission component.

In a second aspect, the present disclosure provides a 3D printing method, in which 3D printing is performed by using any one of the 3D printing apparatuses described according to the first aspect. The method includes the steps of:
causing the printing device to start spraying a first pass of a binder over a powder layer in a direction perpendicular to a powder spreading direction, when the powder spreading device has spread powder by a stroke equal to a width of the printing device;
causing the powder spreading device to uninterruptedly perform a powder spreading operation while the printing device is spraying the binder, and causing the printing device to move in the powder spreading direction by a stroke equal to the width of the printing device and then spray a second pass of the binder in a direction opposite to the direction in which the printing device moves when spraying the first pass of the binder, when the powder spreading device has spread the powder by a second stroke equal to the width of the printing device; and
repeating such operations until the powder spreading device and the printing device complete the powder spreading and printing operations over the entire first layer.

The 3D printing apparatus and the 3D printing method according to the present disclosure have at least the following advantageous effects.

The 3D printing apparatus according to the present disclosure includes a frame in which a working area is formed, wherein a powder spreading device, a printing device, and a moving device are disposed in the working area. The powder spreading device and the printing device are simultaneously driven by the moving device to move in a staggered manner along different moving paths, so that spreading of powder by the powder spreading device and printing by the printing device are implemented at the same time.

A 3D entity can be built in a layer-by-layer stacking manner by uniformly spreading a layer of a powder material while spraying a layer of binder. The 3D printing apparatus according to the present disclosure allows the simultaneous operation of at least one group of powder spreading devices and at least one group of printing devices. Moreover, the powder spreading device and the printing device in the same group can operate at the same time. Thus, the waiting time during operation is effectively eliminated, and uninterrupted powder spreading and printing are achieved, thereby greatly improving the printing efficiency and reducing printing costs. This provides guarantee for facilitating industrialized use of powder 3D printing in various fields.

On the one hand, the powder spreading and printing operations can be performed at the same time with no waiting time wasted, whereby the printing efficiency can be significantly improved. On the other hand, multiple powder spreading devices and multiple printing devices are allowed to simultaneously perform printing operations on different building platforms in the working area, and the model to be printed on each building platform and the layout of each building platform may be personalized as needed.

In the 3D printing method according to the present disclosure, 3D printing is performed by using any of the 3D printing apparatuses described according to the first aspect. The method includes the steps of: causing the printing device to start spraying a first pass of a binder over a powder layer in a direction perpendicular to a powder spreading direction when the powder spreading device has spread powder by a stroke equal to a width of the printing device; causing the powder spreading device to uninterruptedly perform a powder spreading operation while the printing device is spraying the binder, and causing the printing device to move in the powder spreading direction by a stroke equal to the width of the printing device and then spray a second pass of the binder in a direction opposite to the direction in which the printing device moves when spraying the first pass of the binder when the powder spreading device has spread the powder by a second stroke equal to the width of the printing device; and repeating such operations until the powder spreading device and the printing device complete the powder spreading and printing operations over the entire first layer.

A more flexible operation is achieved and the printing efficiency is greatly improved by means of the uninterrupted coordinated operation of the powder spreading device and the printing device.

### Brief Description of Drawings

In order to more clearly illustrate technical solutions of specific embodiments of the present disclosure or of the prior art, drawings required for use in the description of the specific embodiments or the prior art will be described briefly below. It is obvious that the drawings in the following description are illustrative of some embodiments of the present disclosure. It will be understood by those of ordinary skill in the art that other drawings can also be obtained from these drawings without any inventive effort.
FIG. 1 is a schematic overall structural view of a 3D printing apparatus according to an embodiment of the present disclosure;
FIG. 2 is a schematic perspective structural view of a powder processing system according to an embodiment of the present disclosure;
FIG. 3 is a schematic perspective structural view of a liquid material device according to an embodiment of the present disclosure;
FIG. 4 is a schematic perspective structural view of a moving device according to an embodiment of the present disclosure;
FIG. 5 is a schematic structural view of an embodiment of a powder spreading device and a printing device according to an embodiment of the present disclosure; and
FIG. 6 is a schematic structural view of another embodiment of a powder spreading device and a printing device according to an embodiment of the present disclosure.

Reference Numerals: 100-frame; 200-powder spreading device; 300-printing device; 400-moving device; 410-guiding mechanism; 411-first guide frame; 412-second guide frame; 420-driving mechanism; 430-detection sensor; 500-building platform; 600-liquid material device; 610-liquid material tank; 620-liquid material pump; 630-filter unit; 640-pipeline; 650-control valve; 700-powder processing system; 710-powder supply device; 720-powder mixing device; 730-powder conveying device; 740-quantifying device; 750-vibration feeding device; 800-conveying device.

### Detailed Description of Embodiments

The technical solutions of the present disclosure will be described below clearly and completely with reference to the accompanying drawings. It is apparent that the embodiments to be described are some, but not all of the embodiments of the present disclosure. All the other embodiments obtained by those of ordinary skill in the art in light of the embodiments of the present disclosure without inventive efforts will fall within the scope of the present disclosure as claimed.

In the description of the present disclosure, it should be noted that the terms such as "center", "up", "down", "left", "right", "vertical", "horizontal", "inside", and "outside" indicate the orientation or positional relationships shown based on the figures, and these terms are intended only to facilitate the description of the present disclosure and simplify the description, but not intended to indicate or imply that the referred devices or elements must be in a particular orientation or constructed or operated in the particular orientation, and therefore should not be construed as limiting the present disclosure. In addition, the terms "first", "second", and "third" are used for descriptive purposes only, and should not be understood as an indication or implication of relative importance.

In the description of the present disclosure, it should be noted that the terms "mount", "couple", and "connect" should be understood broadly unless otherwise expressly specified or defined. For example, connection may be fixed connection or detachable connection or integral connection, may be mechanical connection or electric connection, or may be direct coupling or indirect coupling via an intermediate medium or internal communication between two elements. The specific meanings of the above-mentioned terms in the present disclosure can be understood by those of ordinary skill in the art according to specific situations.

Specific embodiments of the present disclosure will be described in detail below with reference to the accompanying drawings. It should be understood that the specific embodiments described here are only intended to illustrate and explain the present disclosure and are not intended to limit the present disclosure.

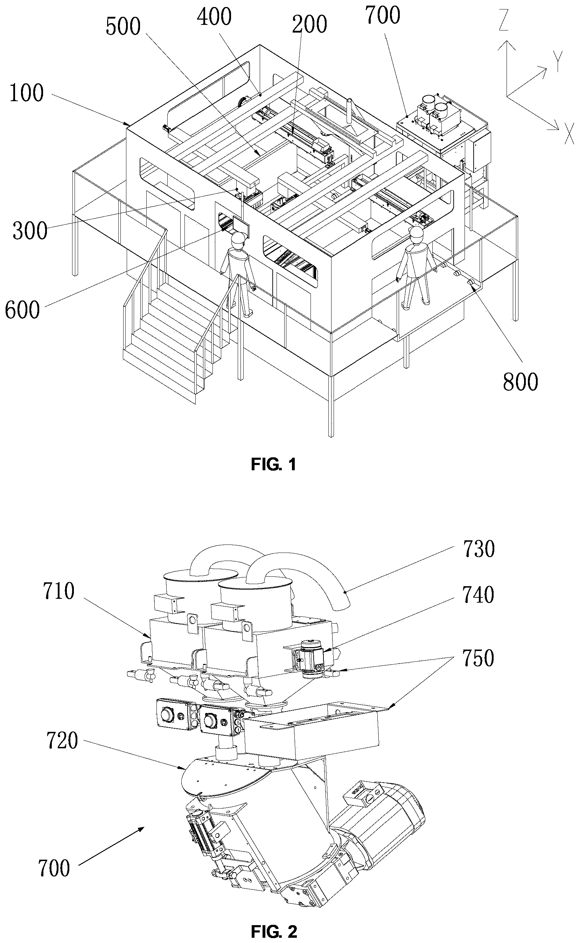

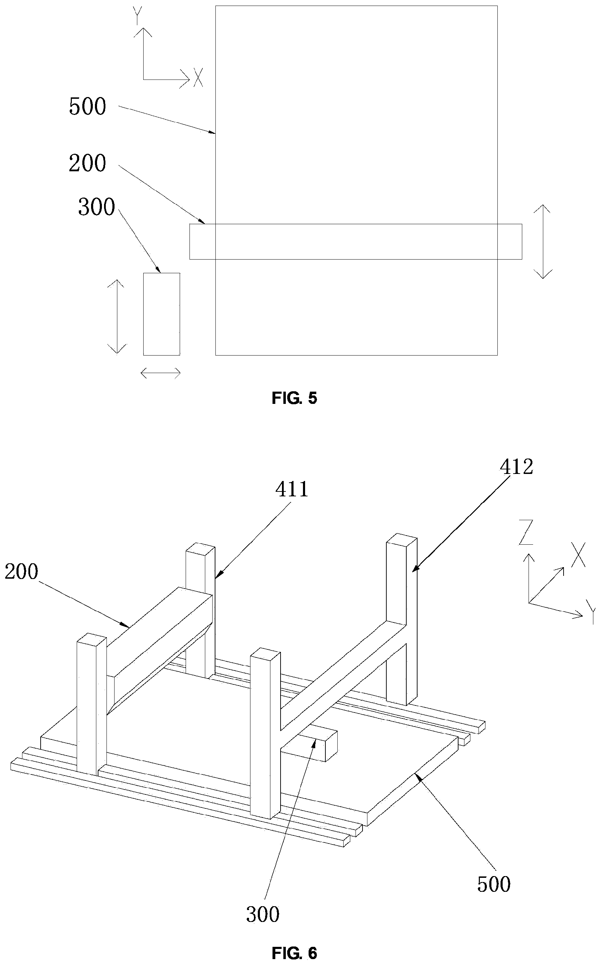

Referring to FIGS. 1 to 6, a 3D printing apparatus and a 3D printing method according to embodiments of the present disclosure will be described in detail below with reference to the accompanying drawings.

In a first aspect, an embodiment of the present disclosure provides a 3D printing apparatus including a frame 100 in which a working area is formed,
wherein a powder spreading device 200, a printing device 300, and a moving device 400 are disposed in the working area.

The powder spreading device 200 and the printing device 300 are simultaneously driven by the moving device 400 to move in a staggered manner along different moving paths so that spreading of powder by the powder spreading device 200 and printing by the printing device 300 are implemented at the same time.

Referring to FIG. 1, a 3D entity can be built in a layer-by-layer stacking manner by spreading a uniform layer of a powder material while spraying a layer of binder. The 3D printing apparatus according to the present disclosure allows the simultaneous operation of at least one powder spreading device 200 and at least one group of printing devices 300. Moreover, the powder spreading device 200 and the printing device 300 in the same group can operate at the same time. Thus, the waiting time during operation is effectively eliminated, and uninterrupted powder spreading and printing are achieved, thereby greatly improving the printing efficiency and reducing printing costs. This provides guarantee for facilitating industrialized use of powder 3D printing in various fields.

On the one hand, the powder spreading and printing operations can be performed at the same time with no waiting time wasted, whereby the printing efficiency can be significantly improved. On the other hand, multiple powder spreading devices 200 and multiple printing devices 300 are allowed to simultaneously perform printing operations on different building platforms 500 in the working area, and the model to be printed on each building platform 500 and the layout of each building platform 500 may be personalized as needed.

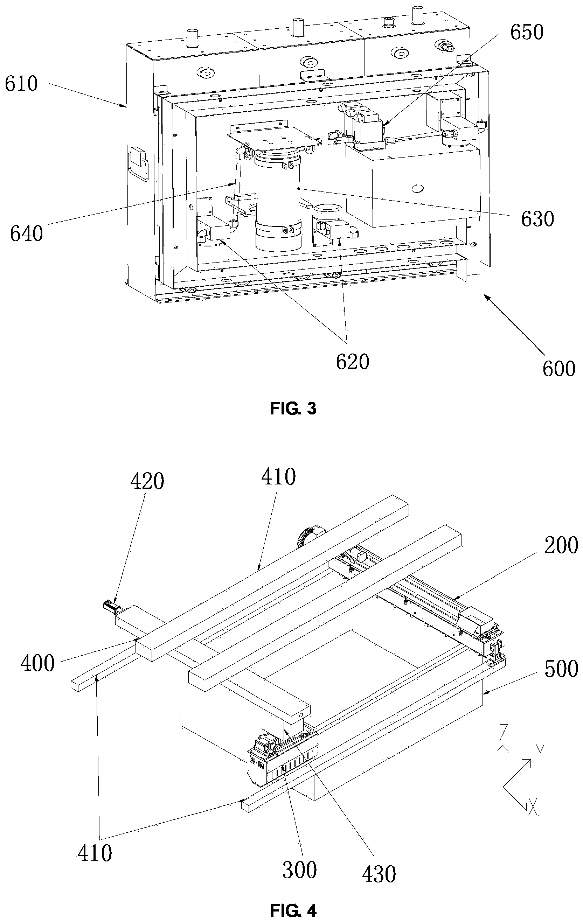

Referring to FIG. 4, the moving device 400 includes a guiding mechanism 410, a driving mechanism 420, and a detection sensor 430.

The driving mechanism 420 is in transmission connection with the guiding mechanism 410. The detection sensor 430 is disposed on the guiding mechanism 410 and is configured to detect the positions of the powder spreading device 200 and the printing device 300.

Both the printing device 300 and the powder spreading device 200 are disposed on the guiding mechanism 410.

Further, the 3D printing apparatus further includes a building platform 500.

The powder spreading device 200 has a length greater than or equal to the width of the building platform 500.

The driving mechanism 420 drives the guiding mechanism 410 to move on the building platform 500.

Specifically, it is necessary to set a predetermined program in a controller here. The controller may be selected as in the prior art. Principally, the program in the controller is programmed and debugged according to different requirements so that the moving device 400 can independently drive the building platform 500, the powder spreading device 200, and the printing device 300 to move along fixed directions and paths, respectively. The moving device 400 allows the simultaneous movement of the powder spreading device 200 and the printing device 300. Moreover, when in a particular position, the moving device 400 can drive the powder spreading device 200 and the printing device 300 to be staggered from each other and start reciprocating to perform powder spreading and printing operations without interfering with each other.

The driving mechanism 420 may be implemented by means of a gear rack, a timing belt and/or a lead screw driven by a motor, or the like. The position detection device may be selected from an infrared sensor or a position sensor or the like for detecting the position of the printing device 300, so that the printing device 300 can be better coordinated with the powder spreading device 200.

The following three directions will be explained first. In the drawings, the Y direction refers to a first direction, the X direction refers to a second direction, and the Z direction refers to a third direction.

Here, the guiding mechanism 410 includes a first guide frame 411 and a second guide frame 412.

The powder spreading device 200 is mounted to the first guide frame 411. The printing device 300 is mounted to the second guide frame 412.

Both the first guide frame 411 and the second guide frame 412 reciprocate in the first direction. The specific shapes of the two guide frames are not specifically limited, as long as they are able to reciprocate in the first direction, by being driven by the driving mechanism 420 here. The specific structure of the driving mechanism 420 may be a cylinder, a hydraulic cylinder, or a gear rack, a timing belt or a lead screw driven by a motor, or the like.

The powder spreading device 200 and the printing device 300 may be mounted in multiple selectable modes, specifically in the following selected modes.

In the first mode, the powder spreading device 200 reciprocates in the first direction of the building platform 500 along with the first guide frame 411.

The printing device 300 reciprocates in the first direction of the building platform 500 along with the second guide frame 412 and can reciprocate also in the second direction perpendicular to the first direction.

A movement displacement of the printing device 300 in the second direction is greater than the length of the powder spreading device 200.

Specifically, the first direction (Y direction) is parallel to a length direction of a square box on the building platform 500 in the working area. A ratio of the speed of the printing device 300 to the speed of the powder spreading device 200 is adjusted in order to facilitate the continuous coordinated operation of the printing device 300 and the powder spreading device 200 in such a manner the printing device 300 does not wait. The speed of the printing device 300 is 2 to 5 times, for example, 2 times, 3 times, 4 times, or 5 times, faster than that of the powder spreading device 200. The speed of the printing device 300 which is several times faster than that of the powder spreading device 200 is specifically selected in relation with the size of the square box and the selected types of the printing device 300 and the powder spreading device 200.

The powder spreading device 200 moves in a single horizontal direction which is the first direction (Y direction). The printing device 300 moves in two horizontal directions perpendicular to each other, namely, the first direction and the second direction (Y/X direction). When the powder spreading device 200 needs to return back after it has spread powder in one direction, the printing device 300 moves beyond the length range of the powder spreading device 200 in the second direction (X direction) which is a direction perpendicular to the powder spreading direction, so that the powder spreading device 200 can return back without interfering with or colliding with the printing device 300. The specific working process is described below.

When a printing job is started, the conveying device 800 drives at least one building platform 500 into at least one of working areas independent of each other. The powder spreading device 200 starts working first and spreads a uniform layer of powder with a settable thickness over the building platform 500 in a positive direction of the first direction (Y+ direction). When the powder spreading device 200 has spread the powder by a stroke equal to the width of the printing device 300, the printing device 300 arranged in the same working area as the powder spreading device 200 starts spraying a first pass of a binder uniformly over the powder layer in a positive direction of the second direction (X+ direction), which is a direction perpendicular to the powder spreading direction. While the printing device 300 is spraying the binder, the powder spreading device 200 is uninterruptedly performing a normal powder spreading operation. When the powder spreading device 200 has spread the powder by a second stroke equal to the width of the printing device 300, the printing device 300 first moves in the positive direction of the first direction (Y+ direction), i.e., in the powder spreading direction, by a stroke equal to the width of the printing device 300, and then sprays a second pass of the binder in a negative direction of the first direction (X- direction), i.e., in a direction opposite to the direction in which the printing device 300 moves when spraying the first pass of the binder. Such operations are repeated until the powder spreading device 200 and the printing device 300 complete the powder spreading and printing operations over the entire first layer. At this time, the printing device 300 moves in a direction perpendicular to the direction of movement of the powder spreading device 200 to a position staggered from the length of the powder spreading device 200, so that it is ensured that the powder spreading device 200 performs a powder spreading operation in a negative direction, i.e., in a negative direction of the first direction (Y- direction), without interfering with the printing device 300.

Similarly, when the powder spreading device 200 has spread the powder in the negative direction of the first direction (Y- direction) by a stroke equal to the width of the printing device 300, the printing device 300 arranged in the same working area as the powder spreading device 200 starts spraying a first pass of the binder uniformly over the powder layer in the second direction (X direction), which is a direction perpendicular to the powder spreading direction. When the powder spreading device 200 has spread the powder by a second stroke equal to the width of the printing device 300, the printing device 300 first moves in the negative direction of the first direction (Y- direction), i.e., in the powder spreading direction, by a stroke equal to the width of the printing device 300, and then sprays a second pass of the binder in a direction opposite to the direction in which the printing device 300 moves when spraying the first pass of the binder. Such operations are repeated until the powder spreading and printing are completed for all the subsequent layers layer by layer, whereby the printing job is completed. The powder spreading device 200 and the printing device 300 are staggered from each other in a horizontal direction.

In the second mode, the powder spreading device 200 reciprocates in the first direction of the building platform 500 along with the first guide frame 411 and can reciprocate also in the third direction.

The printing device 300 reciprocates in the first direction of the building platform 500 along with the second guide frame 412 and can reciprocate in the second direction and in the third direction, respectively. The first direction, the second direction, and the third direction are perpendicular to one another.

A movement displacement of the printing device 300 in the second direction is greater than the length of the powder spreading device 200, or a movement distance of the printing device 300 in the third direction is higher than the height of the position of the powder spreading device 200.

The powder spreading device 200 moves in the first direction (Y direction) which is a horizontal direction and moves up and down in the third direction (Z direction) for easy spraying of powder. The printing device 300 moves in two horizontal directions perpendicular to each other, namely, the first direction and the second direction (Y/X direction), and in the vertical direction (Z direction). When the powder spreading device 200 needs to return back after it has spread the powder in one direction, the printing device 300 moves beyond the height range of the powder spreading device 200 in the third direction (Z direction), so that the powder spreading device 200 can return back without interfering with the printing device 300. Moreover, since the powder spreading device 200 and the printing device 300 here are both movable up and down in the third direction, 3D printing can be implemented by merely selecting a flat plate that cannot be moved up and down as the building platform 500.

The specific working process is described below. When a printing job is started, the conveying device 800 drives at least one building platform 500 into at least one of working areas independent of each other. The powder spreading device 200 starts working first and spreads a uniform layer of powder with a settable thickness over the building platform 500 in the positive direction of the first direction (Y+ direction). When the powder spreading device 200 has spread the powder by a stroke equal to the width of the printing device 300, the printing device 300 arranged in the same working area as the powder spreading device 200 starts spraying a first pass of a binder uniformly over the powder layer in the positive direction of the second direction (X+ direction), which is a direction perpendicular to the powder spreading direction. While the printing device 300 is spraying the binder, the powder spreading device 200 is uninterruptedly performing a normal powder spreading operation. When the powder spreading device 200 has spread the powder by a second stroke equal to the width of the printing device 300, the printing device 300 first moves in the positive direction of the first direction (Y+ direction), i.e., in the powder spreading direction, by a stroke equal to the width of the printing device 300, and then sprays a second pass of the binder in the negative direction of the first direction (X- direction), i.e., in a direction opposite to the direction in which the printing device 300 moves when spraying the first pass of the binder. Such operations are repeated until the powder spreading device 200 and the printing device 300 complete the powder spreading and printing operations over the entire first layer. At this time, the printing device 300 moves in the third direction (Z direction), i.e., the vertical direction, to a position staggered from the height of the powder spreading device 200, so that it is ensured that the powder spreading device 200 performs a powder spreading operation in the negative direction of the first direction (Y- direction) without interfering with the printing device 300.

Similarly, when the powder spreading device 200 has spread the powder in the negative direction of the first direction (Y- direction) by a stroke equal to the width of the printing device 300, the printing device 300 arranged in the same working area as the powder spreading device 200 starts spraying a first pass of the binder uniformly over the powder layer in the first direction (Y direction) perpendicular to the powder spreading direction. When the powder spreading device 200 has spread the powder by a second stroke equal to the width of the printing device 300, the printing device 300 first moves in the negative direction of the first direction (Y- direction), in which the powder is spread, by a stroke equal to the width of the printing device 300, and then sprays a second pass of the binder in a direction opposite to the direction in which the printing device 300 moves when spraying the first pass of the binder. Such operations are repeated until the powder spreading and printing are completed for all the subsequent layers layer by layer, whereby the printing job is completed. This embodiment is characterized in that the powder spreading device 200 and the printing device 300 are staggered from each other in a vertical direction.

Here, the building platform 500 may be selected from a square box having a bottom plate movable up and down in its depth direction (the third direction, i.e., the Z direction), or from a flat plate that cannot be moved up and down, which may be selected depending only on the powder spreading device 200 and the printing device 300. In other words, if the powder spreading device 200 and the printing device 300 are movable up and down in the third direction, a flat plate may be selected and used. In contrast, if the powder spreading device 200 and the printing device 300 cannot move up and down in the third direction, a square box may be selected and used to ensure a 3D printing effect, provided that the powder spreading device 200 and the printing device are always close to the bottom plate.

The 3D printing apparatus according to an embodiment of the present disclosure further includes a liquid material device 600 configured to provide a printing liquid material. The liquid material device 600 is disposed inside the frame 100, or the liquid material device 600 is disposed independently of the frame 100. Specifically, the liquid material device 600 may be detachably connected to the frame 100 by means of bolts and screws, or directly fixedly connected to the frame 100 by means of welding or riveting.

The liquid material device 600 here comprises components such as a liquid material tank 610, a liquid material pump 620, a filter unit 630, a pipeline 640, and a control valve 650 and provides liquid materials such as a printing curing agent, a binder, and a cleaning agent to the whole machine. The liquid material pump 620 pumps a liquid material from the liquid material tank 610 to the filter unit 630 through the pipeline 640. The filtered liquid material is pumped by another liquid material pump 620 and provided to the 3D printing apparatus. The control valve 650 starts and stops the supply of the liquid material according to a signal sent from the 3D printing apparatus.

Further, the 3D printing apparatus further includes a powder processing system 700 configured to provide powder to the powder spreading device 200.

The powder processing system 700 is disposed independently of the frame 100.

The powder processing system 700 here allows mixing of multiple materials in a quantitative ratio by means of weighing, injection with a constant-diameter tube, and/or a quantitative barrel or the like. The multiple materials may consist of a solid and a liquid, of a solid and a solid, or of a liquid and a liquid, or may be a mixture of the same materials with different particle sizes, such as sand, gypsum, metal powder, or nylon or the like of different meshes, or may be a mixture of different materials described above. The powder processing system 700 placed independently outside the frame 100 can stably supply powder to one or more powder spreading devices 200. The powder processing system 700 comprises modules such as a powder supply device 710, a powder mixing device 720, a powder conveying device 730, a quantifying device 740, and a vibration feeding device 750. A powder material is fed into the powder supply device 710 by the powder conveying device 730. The amount of the fed powder is automatically measured by the quantifying device 740. When the powder material reaches a predetermined amount, the feeding of the powder material is stopped. At this time, the vibration feeding device 750 starts vibrating according to a control signal, and correspondingly, the control valve is opened. The vibration enables all the predetermined amount of the powder in the powder supply device 710 to be shaken off and added to the powder mixing device 720. After one or more operations described above are performed, a predetermined amount of multiple materials is added to the powder mixing device 720. The powder mixing device 720 is activated to mix the multiple materials uniformly, which are then supplied to the 3D printing apparatus.

Further, the 3D printing apparatus further includes a conveying device 800. The conveying device 800 may be a roller conveying device, a belt conveying device, a chain conveying device, an AGV conveying trolley, and/or an RGV conveying trolley, or the like.

The conveying device 800 drives the building platform 500 into or out of the working area by means of a transmission component.

It should be noted that the transmission component here may be selected from a motor-driven roller table or chain or timing belt or the like so as to drive the building platform 500 to move in and out in the horizontal direction.

The conveying device 800 may be docked with a fixed lifting roller table, an automatic conveying trolley, and the like so as to achieve logistics docking for one or more 3D printing apparatuses according to an embodiment of the present disclosure and to achieve docking of the 3D printing apparatus according to an embodiment of the present disclosure with a sand cleaning workstation.

In a second aspect, the present disclosure provides a 3D printing method, in which 3D printing is performed by using any of the 3D printing apparatuses described according to the first aspect. The method includes the steps of:
causing the printing device 300 to start spraying a first pass of a binder over a powder layer in a direction perpendicular to a powder spreading direction when the powder spreading device 200 has spread powder by a stroke equal to a width of the printing device 300;
causing the powder spreading device 200 to uninterruptedly perform a powder spreading operation while the printing device 300 is spraying the binder, and causing the printing device 300 to move in the powder spreading direction by a stroke equal to the width of the printing device 300 and then spray a second pass of the binder in a direction opposite to the direction in which the printing device 300 moves when spraying the first pass of the binder when the powder spreading device 200 has spread the powder by a second stroke equal to the width of the printing device 300;
repeating such operations until the powder spreading device 200 and the printing device 300 complete the powder spreading and printing operations over the entire first layer.

A more flexible operation is achieved and the printing efficiency is greatly improved by means of the uninterrupted coordinated operation of the powder spreading device 200 and the printing device 300.

The 3D printing apparatus and the 3D printing method of the present disclosure have been described above, but the present disclosure is not limited to the specific embodiments described above, and various modifications or variations can be made without departing from the scope of the claims. The present disclosure encompasses various modifications and variations falling within the scope of the claims.

Finally, it should be noted that the above embodiments are merely intended to illustrate the technical solutions of the present disclosure, but not intended to limit the present disclosure. Although the present disclosure has been described in detail with reference to the foregoing embodiments, it should be understood by those of ordinary skill in the art that the technical solutions disclosed in the foregoing embodiments may still be modified, or some or all of the technical features thereof may be replaced with equivalents. Such modifications or replacements will not cause the essence of the corresponding technical solutions to depart from the scope of the technical solutions of the embodiments of the present disclosure.

## Claims

1. A 3D printing apparatus, comprising a frame (100), **characterized in that** a working area is formed in the frame (100),
wherein a powder spreading device (200), a printing device (300), and a moving device (400) are disposed in the working area; and
the powder spreading device (200) and the printing device (300) are simultaneously driven by the moving device (400) to move in a staggered manner along different moving paths, so that spreading of powder by the powder spreading device (200) and printing by the printing device (300) are implemented at the same time.

2. The 3D printing apparatus according to claim 1, wherein the moving device (400) comprises a guiding mechanism (410), a driving mechanism (420), and a detection sensor (430),
wherein the driving mechanism (420) is in transmission connection with the guiding mechanism (410), and the detection sensor (430) is disposed on the guiding mechanism (410) and is configured to detect a position of each of the powder spreading device (200) and the printing device (300); and
both the printing device (300) and the powder spreading device (200) are disposed on the guiding mechanism (410).

3. The 3D printing apparatus according to claim 2, wherein the 3D printing apparatus further comprises a building platform (500),
wherein the powder spreading device (200) has a length greater than or equal to a width of the building platform (500); and
the driving mechanism (420) drives the guiding mechanism (410) to move on the building platform (500).

4. The 3D printing apparatus according to claim 3, wherein the guiding mechanism (410) comprises a first guide frame (411) and a second guide frame (412),
wherein the powder spreading device (200) is mounted to the first guide frame (411); the printing device (300) is mounted to the second guide frame (412); and
both the first guide frame (411) and the second guide frame (412) reciprocate in a first direction.

5. The 3D printing apparatus according to claim 4, wherein the powder spreading device (200) reciprocates in the first direction of the building platform (500) along with the first guide frame (411); and
the printing device (300) reciprocates in the first direction of the building platform (500) along with the second guide frame (412) and is able to reciprocate also in a second direction, wherein the first direction is perpendicular to the second direction,
wherein a movement displacement of the printing device (300) in the second direction is greater than a length of the powder spreading device (200).

6. The 3D printing apparatus according to claim 4, wherein the powder spreading device (200) reciprocates in the first direction of the building platform (500) along with the first guide frame (411) and is able to reciprocate also in a third direction; and
the printing device (300) reciprocates in the first direction of the building platform (500) along with the second guide frame (412) and is able to reciprocate in a second direction and in the third direction, respectively, wherein the first direction, the second direction, and the third direction are perpendicular to one another,
wherein a movement displacement of the printing device (300) in the second direction is greater than a length of the powder spreading device (200), or a movement distance of the printing device (300) in the third direction is higher than a height of a position of the powder spreading device (200).

7. The 3D printing apparatus according to claim 4 or 5, wherein the building platform (500) comprises a square box,
wherein the square box has a bottom plate movable up and down in a third direction.

8. The 3D printing apparatus according to claim 4 or 6, wherein the building platform (500) comprises a flat plate,
wherein the flat plate is not able to move up and down.

9. The 3D printing apparatus according to any one of claims 1 to 6, further comprising a liquid material device (600) configured to provide a printing liquid material, wherein the liquid material device (600) is disposed inside the frame (100), or the liquid material device (600) is disposed independently of the frame (100).

10. The 3D printing apparatus according to any one of claims 1 to 6, further comprising a powder processing system (700) configured to provide powder to the powder spreading device (200),
wherein the powder processing system (700) is disposed independently of the frame (100).

11. The 3D printing apparatus according to any one of claims 3 to 6, further comprising a conveying device (800),
wherein the conveying device (800) drives the building platform (500) into or out of the working area through a transmission component.

12. A 3D printing method, **characterized by** performing 3D printing by using the 3D printing apparatus according to any one of claims 1 to 10, and comprising steps of:
causing the printing device (300) to start spraying a first pass of a binder over a powder layer in a direction perpendicular to a powder spreading direction, when the powder spreading device (200) has spread powder by a stroke equal to a width of the printing device (300);
causing the powder spreading device (200) to uninterruptedly perform a powder spreading operation while the printing device (300) is spraying the binder, and causing the printing device (300) to move in the powder spreading direction by a stroke equal to the width of the printing device (300) and then spray a second pass of the binder in a direction opposite to a direction in which the printing device (300) moves when spraying the first pass of the binder, when the powder spreading device (200) has spread the powder by a second stroke equal to the width of the printing device (300); and
repeating such operations until the powder spreading device (200) and the printing device (300) complete powder spreading and printing operations over an entire first layer.
